# EUROPÄISCHE PATENTSCHRIFT

(11) **EP 2 750 921 B1**
(45) Veröffentlichungstag und Bekanntmachung des Hinweises auf die Patenterteilung: **14.10.2015**
(21) Anmeldenummer: 12756087.8
(22) Anmeldetag: 10.08.2012
(51) Int. Cl.: B60L 11/18, B60R 16/02, H02G 3/04, B60R 16/04, B60L 1/04, H01M 2/20

(54) **STROMVERTEILER FÜR DIE ELEKTRISCHE VERSCHALTUNG VON BATTERIEMODULEN EINES ELEKTROFAHRZEUGS**
POWER DISTRIBUTOR FOR THE ELECTRIC WIRING OF BATTERY MODULES OF AN ELECTRIC VEHICLE
RÉPARTITEUR DE COURANT POUR LA MISE EN CIRCUIT ÉLECTRIQUE DE MODULES DE BATTERIE D'UN VÉHICULE ÉLECTRIQUE

(30) Priorität: 01.09.2011 DE 102011112129
(43) Veröffentlichungstag der Anmeldung: 09.07.2014
(73) Patentinhaber: Audi AG, 85045 Ingolstadt (DE)
(72) Erfinder: FEES, Heiner, 74321 Bietigheim-Bissingen (DE); KÄRCHER, Torsten, 74211 Leingarten (DE); TRACK, Andreas, 74343 Sachsenheim (DE)
(74) Vertreter: Herbst, Matthias Heinz
(86) Internationale Anmeldenummer: PCT/EP2012/003437
(87) Internationale Veröffentlichungsnummer: WO 2013/029749

(56) Entgegenhaltungen:
- WO-A1-2011/088881
- US-A1- 2002 182 480
- US-A1- 2010 081 041
- US-A1- 2010 112 843

## Beschreibung

Die Erfindung betrifft einen Stromverteiler für die elektrische Verschaltung von Batteriemodulen eines Elektrofahrzeugs sowie ein Kraftfahrzeug mit Elektroantrieb.

Die Druckschrift JP 2005 038 688 A betrifft eine Verbindungs-/Stützungsvorrichtung zum Verbinden/Stützen der Anschlussklemmen von benachbarten Akkumulatoren eines Elektrofahrzeugs und beschreibt ein flexibles Verbindungsteil, das zwischen der Plus-Anschlussklemme eines Akkumulators und der dieser Plus-Anschlussklemme gegenüberliegenden Minus-Anschlussklemme eines benachbarten Akkumulators angeordnet ist. Dieses Verbindungsteil weist einen ersten Kontakt auf, der in die Plus-Anschlussklemme gesteckt werden kann, und einen zweiten Kontakt auf, der in die Minus-Anschlussklemme gesteckt werden kann. Die beiden Kontakte sind elastisch derart miteinander verbunden, dass das Verbindungsteil die Anschlussklemmen in einer Expansions- und Kontraktionsrichtung elastisch stützt. US 2010081041 offenbart einem Stromverteiler für die elektrische Verschaltung von Batteriemodulen eines Elektrofahrzeugs, umfassend mehrere Verbindungsstreifen.

Die Druckschrift DE 10 2010 062 080 A1 betrifft einen Kabelbaum und ein Verfahren zum Schaffen einer Verlegungsstruktur desselben und beschreibt ein Hybridfahrzeug mit einem Elektromotor, einem Wechselrichter, einer Batterie und einem Kabelbaum. Dem Elektromotor wird Strom über den Wechselrichter von der Batterie zugeführt. Der Elektromotor und der Wechselrichter sind in einem Motorraum montiert, die Batterie ist zwischen dem Fahrersitz und dem vorderen Beifahrersitz angeordnet. Ein Verteilerblock, der mit der Batterie verbunden ist, ist an einer Vorderseite der Batterie angeordnet. Der Kabelbaum verbindet die Batterie mit dem Wechselrichter und erstreckt sich von dem Motorraum zu einem Unterboden, der an der Bodenseite eines Bodenblechs angeordnet ist. In dem Bodenblech ist direkt unter dem Verteilerblock ein Durchgangsloch ausgebildet. Der Kabelbaum enthält zwei Hochspannungskabel und zwei Verbindungselemente. Jedes Verbindungselement ist in einer L-Form ausgebildet, wobei ein horizontaler Schenkel mit einem der Hochspannungskabel verbunden ist und der senkrechte Schenkel nach oben durch das Durchgangsloch im Bodenblech bis in den Verteilerblock ragt und dort elektrisch mit diesem verbunden ist.

Im Stand der Technik sind Elektrofahrzeuge, insbesondere Kraftfahrzeuge mit Elektroantrieb, wie beispielsweise Hybridautos, deren Antrieb einen Verbrennungsmotor und einen Elektromotor umfasst, und reine Elektroautos, deren Antrieb ausschließlich einen Elektromotor umfasst, bekannt, die als elektrische Energiequelle wieder aufladbare Batterien oder Akkumulatoren aufweisen. Dabei sind die einzelnen galvanischen Zellen in mehreren Batteriemodulen baulich zusammengefasst und nach Bedarf elektrisch miteinander verschaltet. Diese Batteriemodule werden je nach baulicher Gegebenheit des jeweiligen Elektrofahrzeugs angeordnet, bei einem Elektro- oder Hybridauto beispielsweise unter dem Boden des Kofferraums und/oder unter der Rückbank und/oder im hinteren Fußraum zwischen den seitlichen Rücksitzen und/oder in der Mittelkonsole. Für die elektrische Verschaltung der einzelnen Batteriemodule werden bisher elektrische Leitungen wie Kabel oder Stromschienen verwendet, die jeweils individuell so geformt und angebracht sind, dass eine möglichst kurze Verbindungstrecke zwischen den jeweils zu verbindenden Batteriemodulen entsteht. Je nach Lage und Ausrichtung der Batteriemodule können die Leitungen ganz oder teilweise innen, also auf der zu der Längsmittelebene des Fahrzeugs weisenden Seite des Batteriemoduls, und/oder ganz oder teilweise außen, also auf der von der Längsmittelebene wegweisenden Seite des Batteriemoduls, liegen. Die außenliegenden Leitungen und Leitungsabschnitte liegen dabei oft im Deformationsbereich des Fahrzeugs, so dass diese Leitungen und Leitungsabschnitte bei einem-Unfall zerstört werden und Kurzschlüsse entstehen können. Außerdem sind die Leitungen je nach baulicher Gegebenheit des jeweiligen Fahrzeugs unterschiedlich ausgebildet.

Darüber hinaus ist aus der DE 10 2008 050 437 eine gattungsgemäße Verteileranordnung bekannt, die mehrere Energiespeicherblöcke miteinander verbindet und wie sie im Oberbegriff des unabhängigen Anspruchs 1 beschrieben ist.

Die Aufgabe der Erfindung besteht darin, die elektrische Verschaltung von Batteriemodulen eines Elektrofahrzeugs sicherer und einfacher zu gestalten. Diese Aufgabe wird durch einen Stromverteiler gemäß Anspruch 1 und ein Kraftfahrzeug gemäß Anspruch 12 gelöst. Weitere Ausführungsformen sind in den Unteransprüchen beschrieben.

Die Erfindung schlägt gemäß einem ersten Aspekt einen Stromverteiler fürdie elektrische Verschaltung von Batteriemodulen eines Elektrofahrzeugs vor, umfassend eine Verbindungseinheit mit wenigstens drei Leitungen, die jeweils zwei Kontaktenden aufweisen, ein Motorkontaktpaar für den Anschluss eines Elektromotors des Elektrofahrzeugs, ein erstes Batteriekontaktpaar für den Anschluss eines ersten Batteriemoduls; ein zweites Batteriekontaktpaar für den Anschluss eines zweiten Batteriemoduls, wobei das erste Batteriekontaktpaar an einer ersten Seite der Verbindungseinheit sitzt und das zweite Batteriekontaktpaar an einer zweiten Seite der Verbindungseinheit sitzt, wobei ein jeweiliges Kontaktpaar aus zwei Kontaktenden jeweils verschiedener Leitungen gebildet ist.

Da bei dem vorgeschlagenen Stromverteiler die Verbindungseinheit, mit der die elektrische Verschaltung der Kontaktpaare entsprechend der gewünschten elektrischen Verschaltung der Batteriemodule mithilfe der Leitungen erfolgt, diese Leitungen kompakt zusammenfassen kann, sind keine außenliegenden Leitungen mehr erforderlich, so dass der deformationsbedrohte Bereich im Fahrzeug sicherer wird und der vorgeschlagene Stromverteiler einfach im deformationsfreien Bereich möglichst zentral zwischen den Batteriemodulen angeordnet werden kann. Des Weiteren kann der vorgeschlagene Stromverteiler einfach als Standardausführung für unterschiedliche Batterietypen und Fahrzeugtypen ausgestaltet werden, so dass keine unterschiedlichen Bauformen erforderlich sind. Zudem kann der vorgeschlagene Stromverteiler einfach montiert werden, da er eine bauliche Einheit bildet und nicht wie im Stand der Technik mehrere lose Leitungen montiert werden müssen.

An das Motorkontaktpaar kann der Elektromotor nach Bedarf auf beliebige Art und Weise angeschlossen werden, beispielsweise direkt oder indirekt, insbesondere über einen Wechselrichter und/oder ein Hochspannungs-Bordnetz.

Da die beiden Batteriekontaktpaare bevorzugt an gegenüberliegenden Seiten, etwa der linken und der rechten Seite der Verbindungseinheit, bezogen auf die Längsachse oder Längsmittelebene des Elektrofahrzeugs, in das der Stromverteiler eingebaut ist, sitzen, kann der vorgeschlagene Stromverteiler sehr Platz sparend zentral im Elektrofahrzeug zwischen einem linken und einem rechten Batteriemodul angebracht werden.

Die Anzahl der Batteriekontaktpaare kann nach Bedarf beliebig gewählt werden. So kann der vorgeschlagene Stromverteiler beispielsweise sieben weitere Batteriekontaktpaare umfassen, von denen eine an der Vorderseite, drei an der linken Seite und die übrigen drei an der rechten Seite, jeweils bezogen auf die Einbaulage im Elektrofahrzeug der Verbindungseinheit sitzen.

Die Leitungen können nach Bedarf auf beliebige Art und Weise ausgebildet sein und beispielsweise Kabel und/oder Stromschienen umfassen.

Die Kontaktpaare können nach Bedarf auf beliebige Art und Weise elektrisch verbunden sein. So können beispielsweise wenigstens zwei Batteriekontaktpaare in Reihenschaltung und/oder wenigstens zwei Batteriekontaktpaare in Parallelschaltung miteinander verbunden sein. Insbesondere kann die Verbindungseinheit die Batteriekontaktpaare in Reihenschaltung miteinander verbinden, so dass die Spannungen der Batteriemodule addiert werden. Diese Reihenschaltung kann beispielsweise dadurch realisiert werden, dass
- die Verbindungseinheit drei Leitungen umfasst;
- die erste Leitung mit den Pluskontakten des Motorkontaktpaars und des ersten Batteriekontaktpaars verbunden ist;
- die zweite Leitung mit dem Minuskontakt des ersten Batteriekontaktpaars und dem Pluskontakt des zweiten Batteriekontaktpaars verbunden ist;
- die dritte Leitung mit den Minuskontakten des zweiten Batteriekontaktpaars und des Motorkontaktpaars verbunden ist.

Das Motorkontaktpaar kann nach Bedarf auf beliebige Art und Weise angeordnet sein und beispielsweise an der Vorderseite oder Hinterseite oder Oberseite oder Unterseite jeweils bezogen auf die Einbaulage im Elektrofahrzeugs, der Verbindungseinheit sitzen.

In einer bevorzugten Ausführungsform ist vorgesehen, dass wenigstens ein weiteres Batteriekontaktpaar an der linken Seite oder rechten Seite oder Vorderseite oder Hinterseite oder Oberseite oder Unterseite, jeweils bezogen auf die Einbaulage im Elektrofahrzeugs, der Verbindungseinheit sitzen. Hierdurch können nach Bedarf weitere Batteriemodule platzsparend um den vorgeschlagenen Stromverteiler herum angeordnet werden.

In einer anderen bevorzugten Ausführungsform ist vorgesehen, dass die Leitungen zumindest teilweise mit einem elektrisch isolierenden Material umhüllt sind. Dies kann beispielsweise dadurch erfolgen, dass einzelne oder wenigstens zwei oder auch alle Leitungen gemeinsam umspritzt oder umvulkanisiert werden.

In einer weiteren bevorzugten Ausführungsform ist vorgesehen, dass wenigstens eine Leitung wenigstens einen Toleranzabschnitt aufweist, der in Längsrichtung der Leitung bewegbar und/oder dehnbar und/oder stauchbar ist. Dieser Toleranzabschnitt kann nach Bedarf auf beliebige Art und Weise ausgebildet sein und beispielsweise ein flexibles Drahtgeflecht und/oder eine Litze und/oder einen Faltenbalg umfassen und/oder zickzackförmig und/oder wellenförmig sein. Mit einer derartigen Leitung können unterschiedliche Abstände zwischen Kontakten, die mit dieser Leitung verbunden sind, ausgeglichen werden.

Die Verbindungseinheit kann nach Bedarf auf beliebige Art und Weise geformt und beispielsweise im Wesentlichen C-förmig sein.

In einer bevorzugten Ausführungsform ist vorgesehen, dass
- die Verbindungseinheit wenigstens zwei Arme aufweist;
- wenigstens ein Batteriekontaktpaar an der linken Seite jedes Arms, und
- wenigstens ein Batteriekontaktpaar an der rechten Seite jedes Arms sitzt.

Dieser vorgeschlagene Stromverteiler kann somit wenigstens vier Batteriemodule verschalten, von denen jeweils zwei auf jeder Seite der Verbindungseinheit aufeinander gestapelt sind, und ist dabei sehr kompakt. Bevorzugt liegen die Arme in einer gemeinsamen Ebene, insbesondere der Längsmittelebene des Fahrzeugs, können nach Bedarf aber auch anders angeordnet sein.

Die Erfindung schlägt gemäß einem zweiten Aspekt ein Kraftfahrzeug mit Elektroantrieb vor, umfassend
- einen Elektromotor;
- wenigstens zwei Batteriemodule; und
- einen der vorgeschlagenen Stromverteiler.

Das vorgeschlagene Kraftfahrzeug kann beispielsweise ein reines Elektroauto oder ein Hybridauto sein.

In einer bevorzugten Ausführungsform sind die Batteriemodule symmetrisch (links und rechts) bezüglich der Längsmittelebene des Kraftfahrzeugs angeordnet. Dadurch kann eine ausgeglichene Massenverteilung erreicht werden.

In einer weiteren bevorzugten Ausführungsform ist der Stromverteiler auf der Längsmittelebene des Kraftfahrzeugs angeordnet. Dies ermöglicht eine zentrale, platzsparende Anordnung des Stromverteilers zwischen den Batteriemodulen.

Beispielhafte Ausführungsformen der Erfindung werden im Folgende anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden werden. Die Einzelheiten zu den Zeichnungen sind nur erläuternd, nicht aber beschränkend auszulegen. Die in den Ansprüchen enthaltenen Bezugszeichen sollen den Schutzbereich in keiner Weise beschränken, sondern verweisen lediglich auf die in den Zeichnungen gezeigten Ausführungsformen.

Die Zeichnungen zeigen in:
- Fig. 1: eine Perspektivansicht von links oben vorne eines Stromverteilers in einer bevorzugten Ausführungsform;
- Fig. 2: den Stromverteiler der Fig. 1 mit entfernten Deckeln;
- Fig. 3: eine Perspektivansicht von rechts oben hinten des Stromverteilers der Fig. 1 mit entferntem Gehäuse;
- Fig. 4: den Stromverteiler der Fig. 1 mit entfernten Deckeln und entferntem Gehäuse;
- Fig. 5: eine Perspektivansicht von links, oben vorne des Stromverteilers der Fig. 1 zusammen mit fünf angeschlossenen Batteriemodulen.

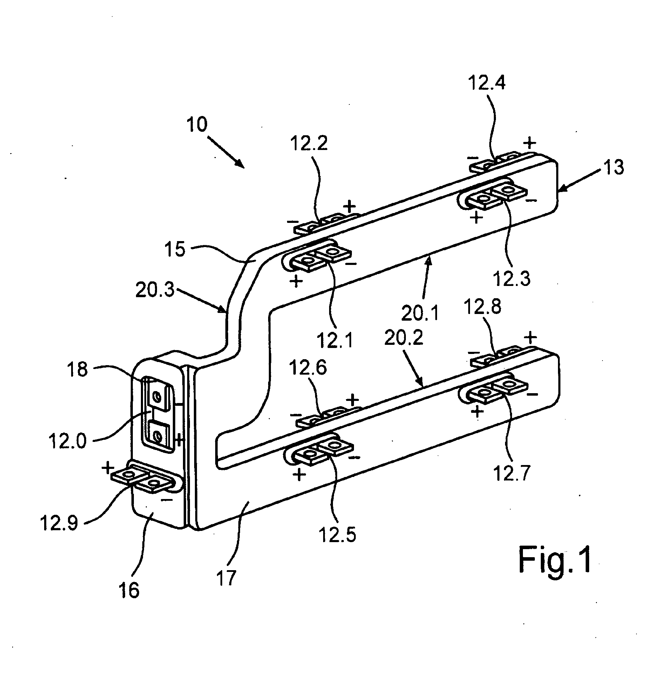

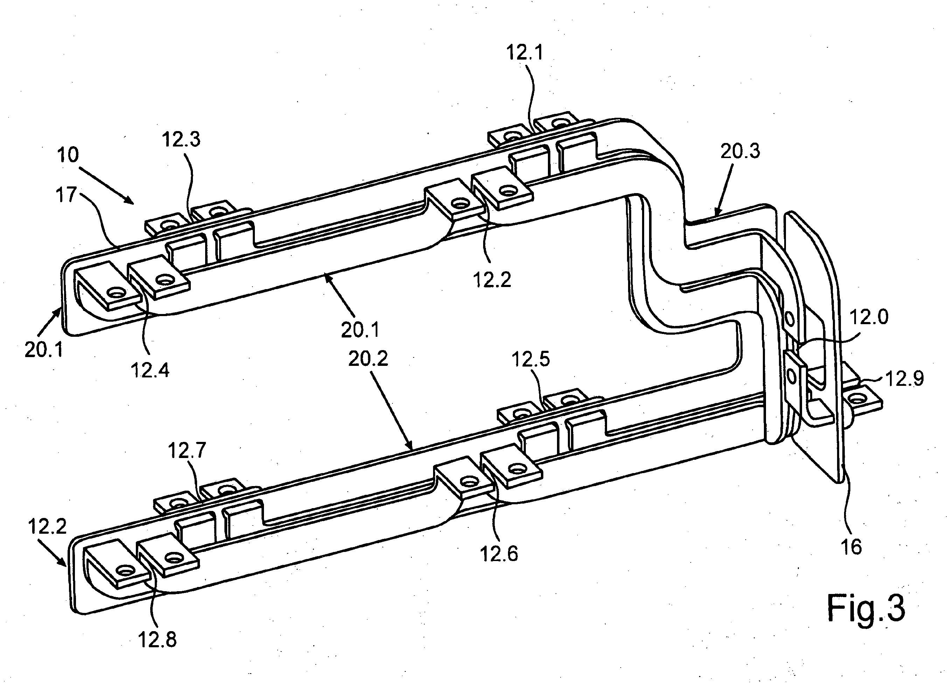

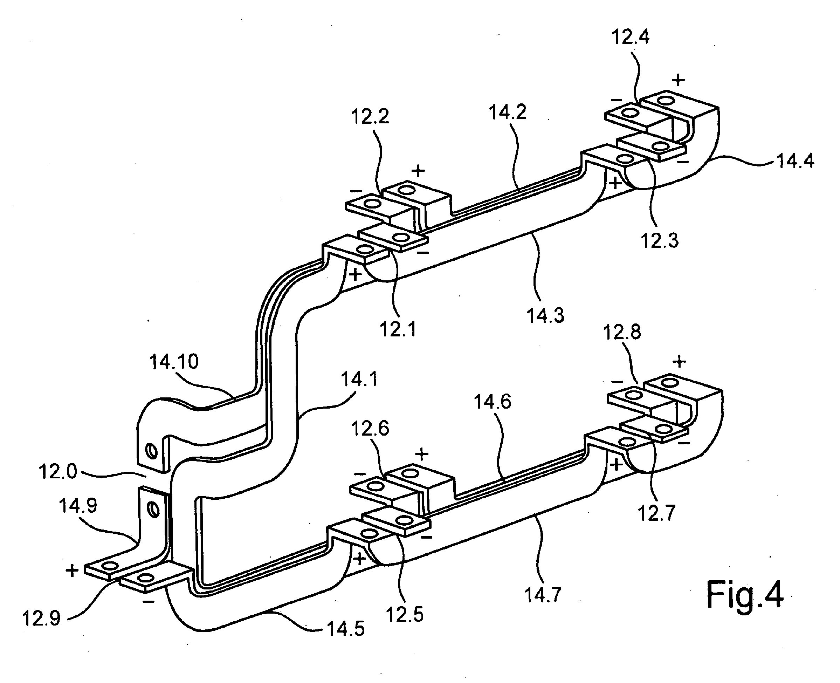

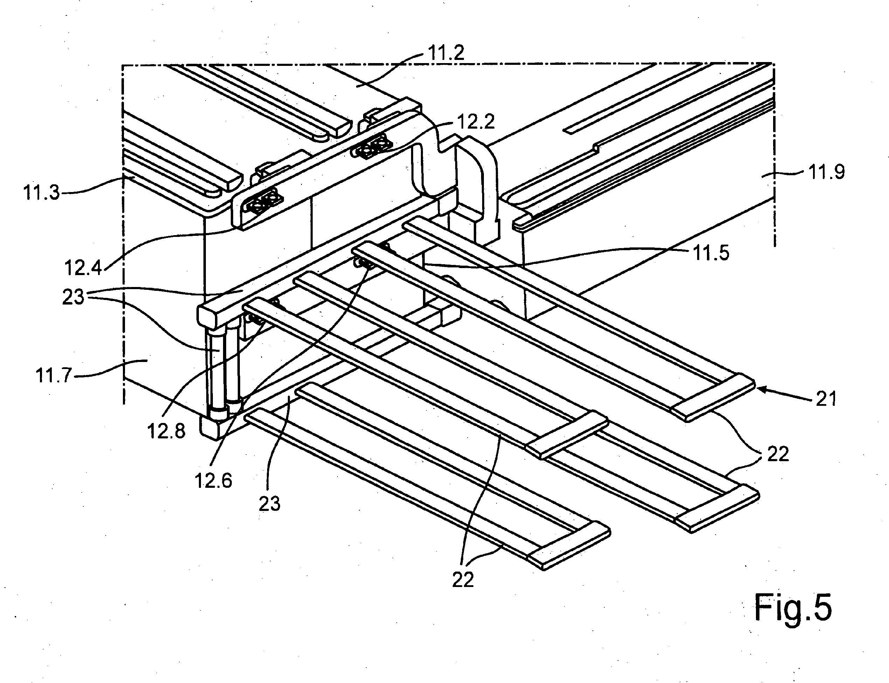

In den Figuren 1, 2, 3, 4 und 5 ist ein Stromverteiler 10 für die elektrische Verschaltung von Batteriemodulen 11 eines Elektrofahrzeugs gemäß der Erfindung in einer ersten Ausführungsform schematisch dargestellt. Der Stromverteiler 10 umfasst ein Motorkontaktpaar 12.0 für den Anschluss eines Elektromotors des Elektrofahrzeugs, neun Batteriekontaktpaare 12.1, 12.2, 12.3, 12.4, 12.5, 12.6, 12.7, 12.8, 12.9 für den Anschluss von neun Batteriemodulen 11, von denen in Fig. 5 lediglich die fünf Batteriemodule 11.1, 11.3, 11.5, 11.7 und 11.9 dargestellt sind, und eine Verbindungseinheit 13 mit Leitungen 14, die mit den Kontaktpaaren 12 elektrisch verbunden sind. Von den neuen Batteriekontaktpaaren 12 sitzen vier, nämlich das erste 12.1, das dritte 12.3, das fünfte 12.5 und das siebte Batteriekontaktpaar 12.7 an der linken Seite der Verbindungseinheit 13, vier andere, nämlich das zweite 12.2, das vierte 12.4, das sechste 12.6 und das achte Batteriekontaktpaar 12.8 an der rechten Seite der Verbindungseinheit 13 und das verbleibende neunte Batteriekontaktpaar 12.9 an der Vorderseite der Verbindungseinheit 13.

Bei dieser Ausführungsform sind die Leitungen 14 als Stromschienen aus massivem Kupfer ausgebildet, die jeweils einstückig mit den mit ihnen verbundenen Kontakten der ihnen zugeordneten Kontaktpaare 12 sind.

Bei dieser Ausführungsform umfasst die Verbindungseinheit 13 zusätzlich zu den Leitungen 14 ein Gehäuse 15, einen Vorderdeckel 16 und einen Seitendeckel 17. Das Gehäuse 15 nimmt die Leitungen 14 auf und bildet die rechte Seite, die Hinterseite, die Oberseite und die Unterseite der Verbindungseinheit 13. Der Vorderdeckel 16 schließt das Gehäuse 15 nach vorne ab und bildet die Vorderseite der Verbindungseinheit 13. Er weist in seiner oberen Hälfte eine Zugangsöffnung 18 auf, durch die die im Gehäuse 15 liegenden Kontakte des Motorkontaktpaars 12.0 von außen zugänglich sind. Der Seitendeckel 17 schließt das Gehäuse 15 nach links ab und bildet die linke Seite der Verbindungseinheit 13.

In der Fig. 1 ist gut zu erkennen, dass die Kontakte der vier linken Batteriekohtaktpaare 12.1, 12.3, 12.5, 12.7 durch den Seitendeckel 17, die Kontakte der vier rechten Batteriekontaktpaare 12.2, 12.4, 12.6, 12.8 durch die rechte Seite des Gehäuses 15 und die Kontakte des vorderen Batteriekontaktpaars 12.9 durch den Vorderdeckel 16 unterhalb der Zugangsöffnung 18 nach außen geführt sind. Die Kontakte sind angrenzend an das Gehäuse 15 und die Deckel 16, 17 jeweils von einem elastischen Dichtelement 19 umgeben, das eine Abdichtung zu dem jeweils angeschlossenen Batteriemodul 11 gewährleistet.

Bei dieser Ausführungsform ist die Verbindungseinheit 13 im Wesentlichen C-förmig und weist zwei Arme 20.1, 20.2 auf, die in einer gemeinsamen Ebene liegen und an ihren vorderen Enden über einen doppel-S-förmigen oder dreimal geknickten oder schwanenhalsförmigen Abschnitt 20.3 miteinander verbunden sind. An der linken Seite des oberen Arms 20.1 sitzen die beiden oberen linken Batteriekontaktpaare 12.1, 12.3, an der rechten Seite des oberen Arms 20.1 sitzen die beiden oberen rechten Batteriekontaktpaare 12.2, 12.4, an der linken Seite des unteren Arms 20.2 sitzen die beiden unteren linken Batteriekontaktpaare 12.5, 12.7 und an der rechten Seite des unteren Arms 20.2 sitzen die beiden unteren rechten Batteriekontaktpaare 12.6, 12.8.

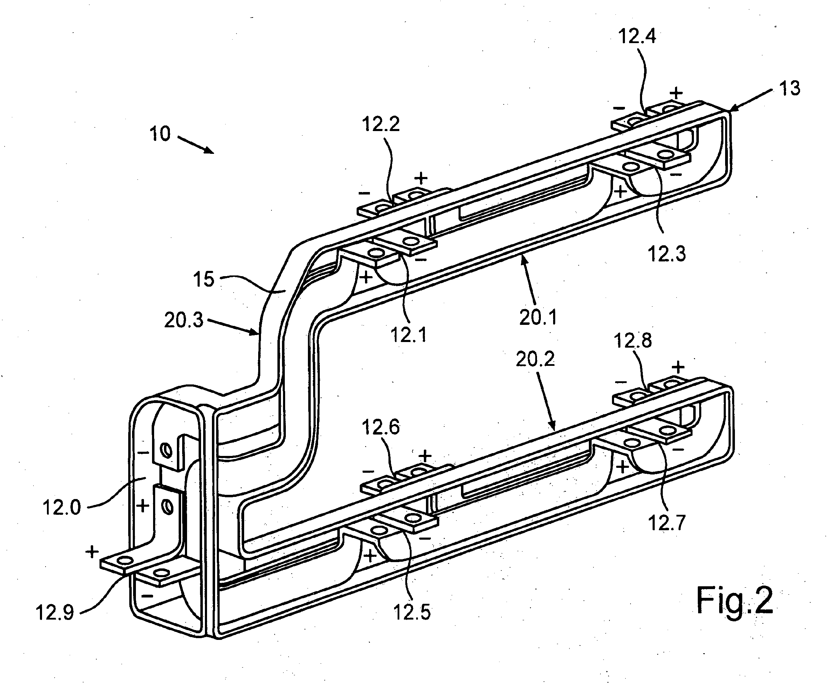

In den Figuren 2, 3 und 4 ist gut zu erkennen, dass die Verbindungseinheit 13 die Batteriekontaktpaare 12.1 bis 12.9 in Reihenschaltung miteinander verbindet und hierfür zehn Leitungen 14.1, 14.2, 14.3, 14.4, 14.5, 14.6, 14.7, 14.9, 14.10 umfasst. Diese Leitungen 14 sind jeweils mit Abstand zueinander angeordnet und somit nicht elektrisch miteinander verbunden. Die Leitung 14.1 ist mit dem Pluskontakt des Batteriekontaktpaars 12.1 und dem Minuskontakt des Batteriekontaktpaars 12.6 verbunden. Die Leitung 14.2 ist mit dem Pluskontakt des Batteriekontaktpaars 12.2 und dem Minuskontakt des Batteriekontaktpaars 12.4 verbunden. Die Leitung 14.3 ist mit dem Pluskontakt des Batteriekontaktpaars 12.3 und dem Minuskontakt des Batteriekontaktpaars 12.1 verbunden. Die Leitung 14.4 ist mit dem Pluskontakt des Batteriekontaktpaars 12.4 und dem Minuskontakt des Batteriekontaktpaars 12.3 verbunden. Die Leitung 14.5 ist mit dem Pluskontakt des Batteriekontaktpaars 12.5 und dem Minuskontakt des Batteriekontaktpaars 12.9 verbunden. Die Leitung 14.6 ist mit dem Pluskontakt des Batteriekontaktpaars 12.6 und dem Minuskontakt des Batteriekontaktpaars 12.8 verbünden. Die Leitung 14.7 ist mit dem Pluskontakt des Batteriekontaktpaars 12.7 und dem Minuskontakt des Batteriekontaktpaars 12.5 verbunden. Die Leitung 14.8 ist mit dem Pluskontakt des Batteriekontaktpaars 12.8 und dem Minuskontakt des Batteriekontaktpaars 12.7 verbunden. Die Leitung 14.9 ist mit dem Pluskontakt des Batteriekontaktpaars 12.9 und dem Pluskontakt des Motorkontaktpaars 12.0 verbunden. Die Leitung 14.10 ist mit dem Minuskontakt des Motorkontaktpaars 12.0 und dem Minuskontakt des Batteriekontaktpaars 12.2 verbunden. Folglich sind die Batteriekontaktpaare 12.2, 12.4, 12.3, 12.1, 12.6, 12.8, 12.7, 12.5 und 12.9 in dieser Reihenfolge in Reihenschaltung miteinander verbunden.

In der Fig. 5 ist gut zu erkennen, wie die Batteriemodule 11 an den Stromverteiler 10 angeschlossen sind, jedoch sind aus Gründen der Übersichtlichkeit lediglich fünf der neun an den Stromverteiler 10 anschließbaren Batteriemodule 11 dargestellt, nämlich die Batteriemodule 11.1, 11.3, 11.5 und 11.7, Die an die Batteriekontaktpaare 12.1, 12.3, 12.5 und 12.7 an der linken Seite der Verbindungseinheit angeschlossen sind, sowie das Batteriemodul 11.9, das an das Batteriekontaktpaar 12.9 an der Vorderseite der Verbindungseinheit 13 angeschlossen ist. In der Fig. 5 ist weiter ein Kühlsystem 21 für die Batteriemodule 11 dargestellt, das Kühlmittelschlaufen 22 und Versorgungsleitungen 23 umfasst, die ein Kühlmittel zu den Kühlmittelschlaufen 22 hin und von diesen weg führen. Die Kühlmittelschlaufen 22 liegen eng an den Unterseiten der Batteriemodule 11 an, so dass die beim Betrieb der Batteriemodule 11 entstehende Wärme abgeführt werden kann.

## Patentansprüche

1. Stromverteiler (10) für die elektrische Verschaltung von Batteriemodulen (11) eines Elektrofahrzeugs,
- ein Motorkontaktpaar (12.0) für den Anschluss eines Elektromotors des Elektrofahrzeugs;
- ein erstes Batteriekontaktpaar (12.1) für den Anschluss eines ersten Batteriemoduls (11.1);
- ein zweites Batteriekontaktpaar (12.2) für den Anschluss eines zweiten Batteriemoduls; **dadurch gekennzeichnet, dass** der Stromverteiler eine Verbindungseinheit (13) mit wenigstens drei Leitungen (14) umfasst, die jeweils zwei Kontaktenden aufweisen;
- das erste Batteriekontaktpaar (12.1) an einer ersten Seite der Verbindungseinheit (13) sitzt;
- das zweite Batteriekontaktpaar (12.2) an einer zweiten Seite der Verbindungseinheit (13) sitzt,
ein jeweiliges Kontaktpaar (12.0, 12.1, 12.2) aus zwei Kontaktenden jeweils verschiedener Leitungen der Verbindungseinheit (13) gebildet ist.

2. Stromverteiler (10) nach Anspruch 1, wobei das erste Batteriekontaktpaar (12.1) an einer ersten Seite der Verbindungseinheit (13) sitzt und das zweite Batteriekontaktpaar (12.2) an einer zweiten Seite der Verbindungseinheit (13) sitzt.

3. Stromverteiler (10) nach Anspruch 2, wobei die Verbindungseinheit (13) wenigstens zwei Batteriekontaktpaare (12.1, 12.2, 12.3, 12.4, 12.5, 12.6, 12.7, 12.8, 12.9) in Reihenschaltung und/oder wenigstens zwei Batteriekontaktpaare in Parallelschaltung miteinander verbindet.

4. Stromverteiler (10) nach Anspruch 3, wobei die Verbindungseinheit (13) die Batteriekontaktpaare (12.1, 12.2, 12.3, 12.4, 12.5, 12.6, 12.7, 12.8, 12.9) in Reihenschaltung miteinander verbindet.

5. Stromverteiler (10) nach Anspruch 4, wobei
- die Verbindungseinheit (13) drei Leitungen (14) umfasst;
- die erste Leitung (14) mit den Pluskontakten des Motorkontaktpaars (12.0) und des ersten Batteriekontaktpaars (12.1) verbunden ist;
- die zweite Leitung (14) mit dem Minuskontakt des ersten Batteriekontaktpaars (12.1) und dem Pluskontakt des zweiten Batteriekontaktpaars (12.2) verbunden ist;
- die dritte Leitung (14) mit den Minuskontakten des zweiten Batteriekontaktpaars (12.2) und des Motorkontaktpaars (12.0) verbunden ist.

6. Stromverteiler (10) nach einem der vorhergehenden Ansprüche, wobei das Motorkontaktpaar (12.0) an der Vorderseite oder Hinterseite oder Oberseite oder Unterseite der Verbindungseinheit (13) sitzt.

7. Stromverteiler (10) nach einem der vorhergehenden Ansprüche, wobei wenigstens ein weiteres Batteriekontaktpaar (12.3, 12.4, 12.5, 12.6, 12.7, 12.8, 12.9) an der linken Seite oder rechten Seite oder Vorderseite oder Hinterseite oder Oberseite oder Unterseite der Verbindungseinheit (13) sitzt.

8. Stromverteiler (10) nach einem der vorhergehenden Ansprüche, wobei die Leitungen (14) zumindest teilweise mit einem elektrisch isolierenden Material umhüllt sind.

9. Stromverteiler (10) nach einem der vorhergehenden Ansprüche, wobei wenigstens eine Leitung (14) wenigstens einen Toleranzabschnitt aufweist, der in Längsrichtung der Leitung (14) dehnbar und/oder stauchbar ist.

10. Stromverteiler (10) nach einem der vorhergehenden Ansprüche, wobei die Verbindungseinheit (13) im Wesentlichen C-förmig ist.

11. Stromverteiler (10) nach einem der vorhergehenden Ansprüche, wobei
- die Verbindungseinheit (13) wenigstens zwei Arme (20.1, 20.2) aufweist;
- wenigstens ein Batteriekontaktpaar (12.1, 12.3, 12.5, 12.7) an der einen ersten Seite jedes Arms (20.1, 20.2) und wenigstens ein Batteriekontaktpaar (12.2, 12.4, 12.6, 12.8) an der rechten Seite jedes Arms (20.1, 20.2) sitzt.

12. Stromverteiler (10) nach Anspruch 10, wobei die Arme (20.1, 20.2) in einer gemeinsamen Ebene liegen.

13. Kraftfahrzeug mit Elektroantrieb, umfassend
- einen Elektromotor;
- wenigstens zwei Batteriemodule (11); und
- einen Stromverteiler (10) nach einem der vorhergehenden Ansprüche.

14. Kraftfahrzeug nach Anspruch 13, wobei die Batteriemodule (11) symmetrisch links und rechts von der Längsmittelebene des Kraftfahrzeugs angeordnet sind.

15. Kraftfahrzeug nach Anspruch 13 oder 14, wobei der Stromverteiler (10) auf der Längsmittelebene des Kraftfahrzeugs angeordnet ist.

## Claims

1. Power distributor (10) for the electrical wiring of battery modules (11) in an electric vehicle,
- a motor contact pair (12.0) for connecting an electric motor of the electric vehicle;
- a first battery contact pair (12.1) for connecting a first battery module (11.1);
- a second battery contact pair (12.2) for connecting a second battery module; **characterised in that** the power distributor comprises a connection unit (13) having at least three lines (14), each of which comprises two contact ends;
- the first battery contact pair (12.1) is located on a first face of the connection unit (13);
- the second battery contact pair (12.2) is located on a second face of the connection unit (13),
a respective contact pair (12.0, 12.1, 12.2) is formed from two contact ends of respective different lines of the connection unit (13).

2. Power distributor (10) according to claim 1, wherein the first battery contact pair (12.1) is located on a first face of the connection unit (13) and the second battery contact pair (12.2) is located on a second face of the connection unit (13).

3. Power distributor (10) according to claim 2, wherein the connection unit (13) connects at least two battery contact pairs (12.1, 12.2, 12.3, 12.4, 12.5, 12.6, 12.7, 12.8, 12.9) with one another in series and/or connects at least two battery contact pairs with one another in parallel.

4. Power distributor (10) according to claim 3, wherein the connection unit (13) connects the battery contact pairs (12.1, 12.2, 12.3, 12.4, 12.5, 12.6, 12.7, 12.8, 12.9) with one another in series.

5. Power distributor (10) according to claim 4, wherein
- the connection unit (13) comprises three lines (14);
- the first line (14) is connected to the positive contacts of the motor contact pair (12.0) and of the first battery contact pair (12.1);
- the second line (14) is connected to the negative contact of the first battery contact pair (12.1) and the positive contact of the second battery contact pair (12.2);
- the third line (14) is connected to the negative contacts of the second battery contact pair (12.2) and of the motor contact pair (12.0).

6. Power distributor (10) according to any of the preceding claims, wherein the motor contact pair (12.0) is located on the front face or the rear face or the upper face or the lower face of the connection unit (13).

7. Power distributor (10) according to any of the preceding claims, wherein at least one further battery contact pair (12.3, 12.4, 12.5, 12.6, 12.7, 12.8, 12.9) is located on the left-hand face or the right-hand face or the front face or the rear face or the upper face or the lower face of the connection unit (13).

8. Power distributor (10) according to any of the preceding claims, wherein the lines (14) are coated at least in part with an electrically insulating material.

9. Power distributor (10) according to any of the preceding claims, wherein at least one line (14) comprises at least one tolerance portion which can be extended and/or compressed in the longitudinal direction of the line (14).

10. Power distributor (10) according to any of the preceding claims, wherein the connection unit (13) is substantially C-shaped.

11. Power distributor (10) according to any of the preceding claims, wherein
- the connection unit (13) comprises at least two arms (20.1, 20.2);
- at least one battery contact pair (12.1, 12.3, 12.5, 12.7) is located on a first face of each arm (20.1, 20.2) and at least one battery contact pair (12.2, 12.4, 12.6, 12.8) is located on the right-hand face of each arm (20.1, 20.2).

12. Power distributor (10) according to claim 10, wherein the arms (20.1, 20.2) lie in a common plane.

13. Motor vehicle having an electric drive, comprising
- an electric motor;
- at least two battery modules (11); and
- a power distributor (10) according to any of the preceding claims.

14. Motor vehicle according to claim 13, wherein the battery module (11) is arranged so as to be symmetrical to the left and right of the longitudinal central plane of the motor vehicle.

15. Motor vehicle according to either claim 13 or claim 14, wherein the power distributor (10) is arranged on the longitudinal central plane of the motor vehicle.

## Revendications

1. Répartiteur de courant (10) pour le branchement électrique de modules de batterie (11) d'un véhicule électrique, comportant :
- une paire de contacts de moteur (12.0) pour le raccordement d'un moteur électrique du véhicule électrique ;
- une première paire de contacts de batterie (12.1) pour le raccordement d'un premier module de batterie (11.1) ;
- une deuxième paire de contacts de batterie (12.2) pour le raccordement d'un deuxième module de batterie ;
**caractérisé en ce que** le répartiteur de courant comprend une unité de liaison (13) avec au moins trois lignes (14) qui comportent chacune deux extrémités de contact ;
- la première paire de contacts de batterie (12.1) se trouvant sur un premier côté de l'unité de liaison (13) ;
- la deuxième paire de contacts de batterie (12.2) se trouvant sur un deuxième côté de l'unité de liaison (13) ;
- une paire de contacts respective (12.0, 12.1, 12.2) étant formée par deux extrémités de contact à chaque fois de lignes différentes de l'unité de liaison (13).

2. Répartiteur de courant (10) selon la revendication 1, dans lequel la première paire de contacts de batterie (12.1) se trouve sur un premier côté de l'unité de liaison (13) et la deuxième paire de contacts de batterie (12.2) se trouve sur un deuxième côté de l'unité de liaison (13).

3. Répartiteur de courant (10) selon la revendication 2, dans lequel l'unité de liaison (13) relie au moins deux paires de contacts de batterie (12.1, 12.2, 12.3, 12.4, 12.5, 12.6, 12.7, 12.8, 12.9) en série et/ou au moins deux paires de contacts de batterie en parallèle.

4. Répartiteur de courant (10) selon la revendication 3, dans lequel l'unité de liaison (13) relie les paires de contacts de batterie (12.1, 12.2, 12.3, 12.4, 12.5, 12.6, 12.7, 12.8, 12.9) en série.

5. Répartiteur de courant (10) selon la revendication 4, dans lequel
- l'unité de liaison (13) comprend trois lignes (14) ;
- la première ligne (14) est reliée aux contacts positifs de la paire de contacts de moteur (12.0) et de la première paire de contacts de batterie (12.1) ;
- la deuxième ligne (14) est reliée au contact négatif de la première paire de contacts de batterie (12.1) et au contact positif de la deuxième paire de contacts de batterie (12.2) ;
- la troisième ligne (14) est reliée aux contacts négatifs de la deuxième paire de contacts de batterie (12.2) et de la paire de contacts de moteur (12.0).

6. Répartiteur de courant (10) selon l'une des revendications précédentes, dans lequel la paire de contacts de moteur (12.0) se trouve sur le côté avant ou le côté arrière ou sur le dessus ou le dessous de l'unité de liaison (13).

7. Répartiteur de courant (10) selon l'une des revendications précédentes, dans lequel une autre paire de contacts de batterie (12.3, 12.4, 12.5, 12.6, 12.7, 12.8, 12.9) se trouve sur le côté gauche ou le côté droit ou sur le côté avant ou le côté arrière ou sur le dessus ou le dessous de l'unité de liaison (13).

8. Répartiteur de courant (10) selon l'une des revendications précédentes, dans lequel les lignes (14) sont enveloppées au moins en partie avec un matériau d'isolation électrique.

9. Répartiteur de courant (10) selon l'une des revendications précédentes, dans lequel au moins une ligne (14) comporte au moins un tronçon de tolérance qui peut être étiré et/ou comprimé dans le sens de la longueur de la ligne (14).

10. Répartiteur de courant (10) selon l'une des revendications précédentes, dans lequel l'unité de liaison (13) est globalement en forme de C.

11. Répartiteur de courant (10) selon l'une des revendications précédentes, dans lequel
- l'unité de liaison (13) comporte au moins deux bras (20.1, 20.2) ;
- au moins une paire de contacts de batterie (12.1, 12.3, 12.5, 12.7) se trouve sur un premier côté de chaque bras (20.1, 20.2) et au moins une paire de contacts de batterie (12.2, 12.4, 12.6, 12.8) se trouve sur le côté droit de chaque bras (20.1, 20.2).

12. Répartiteur de courant (10) selon la revendication 10, dans lequel les bras (20.1, 20.2) se trouvent dans un plan commun.

13. Véhicule automobile avec moteur électrique, comprenant :
- un moteur électrique ;
- au moins deux modules de batterie (11) ; et
- un répartiteur de courant (10) selon l'une des revendications précédentes.

14. Véhicule automobile selon la revendication 13, dans lequel les modules de batterie (11) sont agencés symétriquement à gauche et à droite du plan médian longitudinal du véhicule automobile.

15. Véhicule automobile selon la revendication 13 ou 14, dans lequel le répartiteur de courant (10) est agencé dans le plan médian longitudinal du véhicule automobile.
